# EUROPEAN PATENT SPECIFICATION

(11) **EP 3 450 407 B1**
(45) Date of publication and mention of the grant of the patent: **23.08.2023**
(21) Application number: 17789203.1
(22) Date of filing: 05.04.2017
(51) Int. Cl.: C03B 8/04, C03B 37/018, C03B 37/014

(54) **METHOD FOR MANUFACTURING GLASS MATRIX**
VERFAHREN ZUR HERSTELLUNG EINER GLASMATRIX
PROCÉDÉ DE FABRICATION D'UNE MATRICE DE VERRE

(30) Priority: 27.04.2016 JP 2016089084
(43) Date of publication of application: 06.03.2019
(73) Proprietor: Fujikura Ltd., Tokyo 135-8512 (JP)
(72) Inventor: OOZEKI, Nobuo, Sakura-shi Chiba 285-8550 (JP)
(74) Representative: Plasseraud IP
(86) International application number: PCT/JP2017/014234
(87) International publication number: WO 2017/187915

(56) References cited:
- EP-A2- 0 941 971
- JP-A- H05 187 656
- JP-A- H11 255 522
- JP-A- 2004 161 555
- JP-A- 2014 200 623

## Description

### TECHNICAL FIELD

The present invention relates to a method for manufacturing a glass preform.

Priority is claimed on Japanese Patent Application No. 2016-089084, filed on April 27, 2016.

### BACKGROUND ART

Recently, in the manufacturing of silica-based glass that is used in the optics application such as optical fibers, an inorganic silicon compound such as silicon tetrachloride (SiCl₄) has been used as a raw material. However, when SiO₂ is generated by combusting SiCl₄ in oxyhydrogen flame, hydrogen chloride (HCl) which is a corrosive gas is generated.

Patent Document 1 discloses a method for manufacturing synthetic silica glass by gasifying a raw material liquid which is formed from a silicon compound and introducing the obtained raw material gas into a synthesis furnace, the method including a foaming step of generating air bubbles of a gas component that dissolves the raw material liquid, a defoaming step of removing the air bubbles from the raw material liquid, and a flow rate-controlling step of controlling the amount of the raw material liquid, from which the air bubbles have been removed, introduced into a gasifier using a liquid mass flow meter.

In Patent Document 2, there is described an example of manufacturing method of synthetic silica glass. The method comprises in particular generating bubbles in a liquid silicon compound, removing the bubbles and introducing the silicon compound into a vaporizer.

### PRIOR ART DOCUMENTS

### PATENT DOCUMENTS

[Patent Document 1] Japanese Patent No. 4038866
[Patent Document 2] European Patent Application EP 0941971 A2

### DISCLOSURE OF INVENTION

### PROBLEMS TO BE SOLVED BY THE INVENTION

Since SiO₂ generated using a burner is porous glass soot, in order to obtain a high-quality glass preform such as an optical fiber preform, glass soot deposited on a target is dehydrated and sintered. However, when the precise control of the flow rate of a raw material is not stable, there is a likelihood that a decrease in the manufacturing efficiency such as the fluctuation of the bulk density of glass soot, poor dehydration, or the like may occur.

When the flow rate of the raw material fluctuates, the mixing ratio with oxygen (O₂) that has been preliminarily mixed with the raw material before combustion fluctuates. When the raw material compound is an organic silicon compound, in a case in which oxygen lacks, the likelihood of carbon soot being attached to glass soot increases. In contrast, in a case in which oxygen is excessively present, the risk of backfire increases. In addition, since the organic silicon compound combusts, the fluctuation of the flow rate of the raw material changes the temperature of a target on which glass soot is deposited, causes the bulk density of the glass soot to fluctuate, and furthermore, creates a likelihood of the occurrence of a decrease in the manufacturing efficiency, poor dehydration, or the like.

Means for sending (transporting) the raw material liquid up to the gasifier needs to stabilize the amount of the raw material gas obtained by gasifying the raw material liquid supplied to the burner. In a case in which the raw material liquid is sent using a pump, and it is desired to precisely control the flow rate of the raw material liquid and continuously send the raw material liquid, the use of a metering pump (for example, a gear pump, a double plunger pump, or the like) instead of a constant-pressure pump can be considered. However, in the case of using this pump, the flow rate of the liquid being sent fluctuates during the exchange of gear compartment cuts or two plungers, and pulsation is added to the flow.

In the case of transporting the raw material liquid by pressurizing the raw material liquid using gas, it is possible to provide no pumps. However, the control of the flow rate becomes unstable due to the intrusion of the gas. Therefore, even when the controlled value is maintained constant, the actual value significantly varies. The generation of the bubbles of the gas in pipes or a flow-rate meter or the like can be considered as the reason therefor.

In the invention disclosed by Patent Document 1, it is disclosed that the solubility of a gas in a raw material liquid is decreased, then, the raw material liquid in which air bubbles have been generated is introduced into a porous tube, and the air bubbles are removed from the raw material liquid by generating a difference in pressure.

However, generally, the solubility of gas in liquid does not change in a case in which the temperature remains constant. That is, a change in pressure does not lead to a change in the solubility. However, the solubility of gas can be decreased by increasing the temperature of liquid. However, in the case of a flammable liquid, an increase in the temperature of the liquid creates a likelihood of a risk. For example, when the temperature of liquid is increased more than intended due to the runaway, disorder, malfunction, or the like of heating means such as a heater, there is a concern that a risk of ignition, leakage, or the like may be induced.

The present invention has been made in consideration of the above-described circumstances, and an object of the present invention is to provide a method for manufacturing a glass preform which enable the manufacturing of a glass preform by more precisely controlling the flow rate of a raw material compound including an organic silicon compound.

### SUMMARY OF THE INVENTION

According to a first aspect of the present invention, there is provided a method in accordance with claim 1.

In the first aspect, the glass preform may be an optical fiber preform.

According to a second non-claimed aspect, there may be provided an apparatus for manufacturing a glass preform including a liquid-sending flow path that is configured to transport a liquid-form raw material compound including an organic silicon compound by pressurizing the raw material compound using a pressurization gas, a deaeration device that is configured to deaerate a dissolved gas from the pressurized raw material compound in the middle of the liquid-sending flow path, a mass flow controller that is configured to control a flow rate of the deaerated raw material compound that has passed through the deaeration device in the middle of the liquid-sending flow path, a gasifier that is configured to gasify the raw material compound that has passed through the mass flow controller, and a burner that is configured to combust the gasified raw material compound that has passed through the gasifier to generate SiO₂.

In the second non-claimed aspect, in the deaeration device, a specific surface area of the raw material compound may be 0.75 mm⁻¹ or more, and a vacuum exposure time of the raw material compound may be 18 seconds or longer.

In the second non-claimed aspect, the glass preform may be an optical fiber preform.

### EFFECTS OF THE INVENTION

According to the respective aspects of the present invention, the raw material compound is sent after being pressurized using the pressurization gas, and thus no pumps are used, and pulsation can be prevented. In addition, according to the respective aspects of the present invention, the dissolved gas is deaerated before the control of the flow rate of the raw material compound, and thus it is possible to more precisely control the flow rate of the raw material compound.

### BRIEF DESCRIPTION OF THE DRAWINGS

FIG. 1 is a schematic view showing a manufacturing method and a manufacturing apparatus used in an embodiment of the present invention.
FIG. 2 is a graph showing a relationship between a vacuum exposure time and a flow rate variation in examples.

### DESCRIPTION OF THE PREFERRED EMBODIMENTS

Hereinafter, the present invention will be described on the basis of a preferred embodiment with reference to drawings.

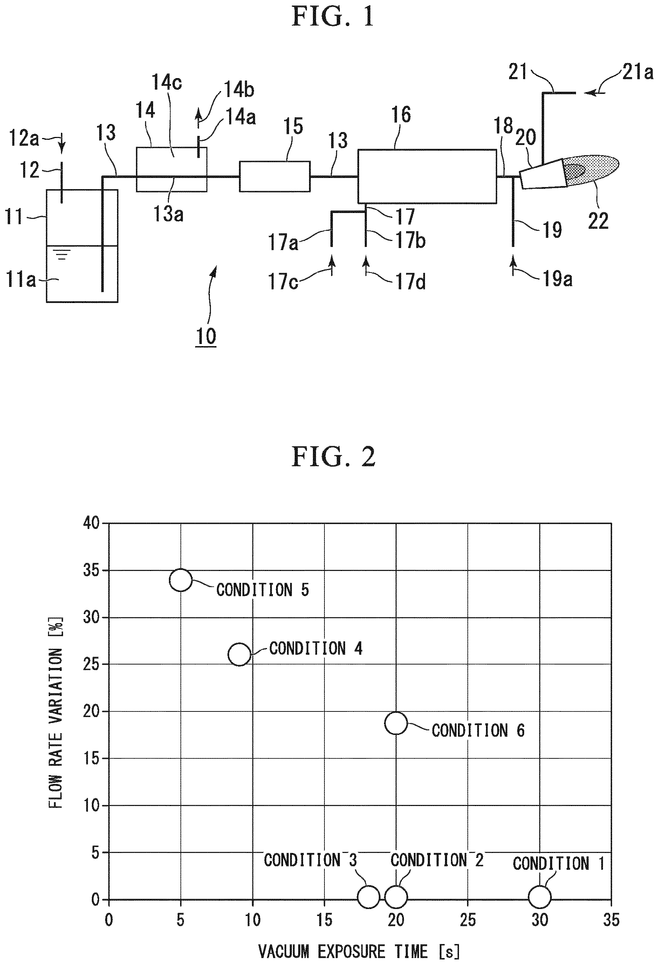

FIG. 1 shows a method for manufacturing a glass preform according to an embodiment of the present invention and an apparatus used in the method of the present invention.

A manufacturing apparatus 10 shown in FIG. 1 includes a liquid-sending flow path 13, a gasifier 16, and a burner 20. The liquid-sending flow path 13 sends a raw material compound 11a. The gasifier 16 gasifies the raw material compound sent through the liquid-sending flow path 13. The burner 20 combusts the raw material compound gasified using the gasifier 16.

A manufacturing method using the manufacturing apparatus 10 includes a liquid-sending step of sending the raw material compound 11a up to the gasifier 16, a gasification step of gasifying the sent raw material compound, and a combustion step of combusting the gasified raw material compound.

A liquid container 11 is connected to a starting end of the liquid-sending flow path 13. The liquid container 11 stores the raw material compound 11a. The liquid container 11 is provided with a gas supply portion 12 for supplying a pressurization gas 12a to the liquid container 11. The pressurization gas 12a pressurizes a liquid of the raw material compound 11a (raw material liquid) and imparts a driving force for transporting the raw material liquid up to at least the gasifier 16. Since there is no need to provide any pumps in the liquid-sending flow path 13, the liquid can be continuously and stably sent without pulsation. Furthermore, it is possible to decrease the risk of the attachment of carbon soot to glass soot or backfire in the burner 20. Examples of the pressurization gas 12a include one or more kinds of gases that do not liquefy at a liquid-sending temperature (for example, approximately room temperature) and do not react with the raw material compound. Specific examples thereof include inert gases such as nitrogen, helium, neon, and argon, oxygen, carbon dioxide, dried air, and the like. Nitrogen (N₂) is preferred due to its inexpensive price.

Examples of the raw material compound 11a include one or more kinds of organic silicon compounds such as alkylsilane, alkoxysilane, alkylsiloxane, and alkylcyclosiloxane.

Examples of alkylsilane include tetraalkylsilane.

Examples of alkoxysilane include tetraalkoxysilane such as tetramethoxysilane; and alkylalkoysilane such as methyltrimethoxysilane.

Examples of alkylsiloxane include hexamethyldisiloxane.

Examples of alkylcyclosiloxane include hexamethylcyclotrisiloxane, tetramethylcyclo tetrasiloxane, octamethylcyclotetrasiloxane, and decamethylcyclopentasiloxane.

In the middle of the liquid-sending flow path 13, a deaeration device 14 is provided. The deaeration device 14 deaerates a dissolved gas from the pressurized raw material compound (the raw material liquid). The deaeration device 14 has an exhaust portion 14a. The exhaust portion 14a is constituted so as to depressurize (vacuum) an inner space 14c and discharge a dissolved gas 14b. The liquid-sending flow path 13 has, in the deaeration device 14, a gas transmission portion 13a for removing the dissolved gas 14b. The gas transmission portion 13a is formed of, for example, a semipermeable membrane capable of transmitting gas without transmitting liquid. The amount of gas dissolved in liquid is proportional to the pressure of gas (Henry's law). Therefore, the liquid is made to flow into the inside of the semipermeable membrane that does not transmit liquid; however, transmits gas, and the outside of the semipermeable membrane is depressurized (vacuumed). Therefore, the gas in the liquid is deaerated through the semipermeable membrane.

A specific surface area of the raw material compound in the deaeration device 14 is 0.75 mm⁻¹ or more. The specific surface area of the raw material compound refers to the vacuum exposure area per unit volume of the raw material liquid. The amount of the dissolved gas in the liquid is proportional to the volume of the liquid. On the other hand, the amount of the gas deaerated during the unit time (deaeration amount) is proportional to the area of an interface through which the dissolved gas is discharged from the liquid (interface area). Therefore, as the specific surface area decreases, the deaeration becomes more disadvantageous. Therefore, a certain degree (the minimum degree) of a specific surface area is required. The upper limit of the specific surface area is not particularly limited; however, a specific surface area larger than necessary is not desirable. When the specific surface area is too large, the pressure loss in the deaeration device 14 increases. In order to stabilize the sending of the liquid, it is necessary to increase the pressure of the pressurization gas 12a; however, an excess pressure causes an increase in the amount of the dissolved gas. Therefore, the specific surface area is preferably 8 mm⁻¹ or less and more preferably 4 mm⁻¹ or less.

In a case in which the raw material compound does not generate air bubbles, the specific surface area of the raw material compound can also be obtained as, for example, the ratio between the surface area and the inner volume of the gas transmission portion 13a. Examples of the vacuum exposure area (the surface area exposed to a vacuum) of the raw material liquid include the inner area of the gas transmission portion 13a. For example, in a case in which the gas transmission portion 13a has a cylindrical shape having an inner diameter of D and a length of L, the surface area S is πDL, and the inner volume V is πD²L/4, and thus the specific surface area S/V is represented by 4/D. In addition, in a case in which the gas transmission portion 13a has a tetragonal prism shape having a side of A and a length of L, the surface area S is 4AL, and the inner volume V is A²L, and thus the specific surface area S/V is represented by 4/A.

As the pressure in the inner space 14c (vacuum) of the deaeration device 14, 17 kPa or less is an exemplary example. The vacuum exposure time of the raw material compound is 18 seconds or longer. The vacuum exposure time refers to a time during which the raw material compound in the gas transmission portion 13a is exposed to a vacuum in the above-described pressure range. The amount of gas being deaerated is proportional to the deaeration time (the vacuum exposure time), and thus, in order to sufficiently remove the dissolved gas, a certain degree (the minimum degree) of deaeration time is required. The upper limit of the vacuum exposure time is not particularly limited; however, a vacuum exposure time longer than necessary is not desirable. In a case in which the vacuum exposure time is too long, the pressure loss in the deaeration device 14 increases. In order to stabilize the sending of the liquid, it is necessary to increase the pressure of the pressurization gas 12a; however, an excess pressure causes an increase in the amount of the dissolved gas. The vacuum exposure time is preferably 60 seconds or shorter and more preferably 30 seconds or shorter. The vacuum exposure time can be adjusted depending on a flow speed of the raw material liquid, the length of the gas transmission portion 13a, and the like.

Furthermore, in the middle of the liquid-sending flow path 13, MFC 15 is provided between the deaeration device 14 and the gasifier 16. MFC 15 refers to a mass flow controller that controls the flow rate of the deaerated raw material compound. The raw material compound that has passed through MFC 15 is sent up to the gasifier 16.

The gasifier 16 may have an introduction portion 17 that introduces gas from the outside. In the present embodiment, the introduction portion 17 has a first introduction portion 17a and a second introduction portion 17b. The first introduction portion 17a introduces a carrier gas 17c. The second introduction portion 17b introduces a combustion-supporting gas 17d. As the purpose of the carrier gas 17c, the adjustment of the concentration of a raw material gas obtained by gasifying the raw material compound, the suppression of the condensation (liquefaction) of the raw material gas, or the like can be considered. Examples of the carrier gas 17c include one or more kinds of inert gases such as nitrogen, helium, neon, and argon. Argon (Ar) is preferred since argon is relatively inexpensive, does not participate in any reactions even when combusted at a high temperature, and is chemically stable.

The combustion-supporting gas 17d that is introduced from the second introduction portion 17b is, for example, an oxidizing gas such as oxygen (O₂). Examples of the combustion-supporting gas include one or more kinds of gases such as oxygen, ozone, and nitrogen oxide. In order to generate SiO₂ by combustion, part or all of the combustion-supporting gas needs to be oxygen or the combustion-supporting gas needs to include an allotrope or compound of oxygen. In a case in which flame 22 of the burner 20 is oxyhydrogen flame, oxygen is used as the combustion-supporting gas. Additional examples of the place for introducing the combustion-supporting gas include a third introduction portion 19 ahead of the burner 20 and a fourth introduction portion 21 in the structure of the burner 20. In the gasifier 16, the second introduction portion 17b may not be provided.

The raw material gas generated by gasification in the gasifier 16 is supplied to the burner 20 through a gas flow path 18 as a gas mixture with the carrier gas 17c or the like. In the gas flow path 18, the third introduction portion 19 for preliminarily mixing a combustion-supporting gas 19a into the raw material gas may be provided as described above. In addition, a plurality of flow paths may be concentrically provided in parallel in the burner 20. The plurality of flow paths may be concyclically provided in parallel.

From the fourth introduction portion 21 connected to a side portion of the burner 20, a gas mixture 21a including a fuel gas is supplied. Examples of the fuel gas include one or more kinds of gases such as hydrogen, methane, and acetylene. In a case in which the flame 22 of the burner 20 is oxyhydrogen flame, hydrogen (H₂) is used as the fuel gas. Hydrogen does not contain carbon (C) and is thus capable of suppressing carbon soot in the flame 22, which is preferable. The gas mixture 21a supplied from the fourth introduction portion 21 may include combustion-supporting gas such as oxygen and inert gas such as argon or nitrogen.

An inner flow path of the burner 20 may have partitions that divide the flow paths of individual gases so that a gas including the raw material gas which is introduced from the third introduction portion 19 and the gas mixture 21a introduced from the fourth introduction portion 21 are mixed together at the outside of the burner 20 (in the flame 22). In the flame 22, the raw material gas, the combustion-supporting gas, the fuel gas, and the like are mixed together and combusted, and SiO₂ is generated.

The generated SiO₂ is deposited on a target such as a glass rod, whereby porous glass soot can be obtained. As a deposition method, a vapor phase axial deposition (VAD) method, an outside vapor deposition (OVD) method, an external deposition method, and the like are exemplary examples. In a step of depositing the glass soot, two or more layers of the glass soot may be repeatedly deposited. In addition, glass soot layers having different doping compositions may be laminated together.

When a step of dehydrating the glass soot and a step of sintering the glass soot are provided after the step of depositing the glass soot, it is possible to obtain a solid glass preform. As the step of dehydrating the glass soot, a method in which the glass soot is installed and heated in an atmosphere of an inert gas including a dehydrating agent or the like is an exemplary example. As the dehydrating agent, chlorine (Cl₂) and chlorine-containing compounds such as thionyl chloride (SOCl₂) are exemplary examples. As a method for sintering the glass soot, a method in which the glass soot is heated at a temperature higher than that during the dehydration is an exemplary example.

According to the method for manufacturing a glass preform (the manufacturing apparatus 10) of the present embodiment, a deaeration step (the deaeration device 14) and then a flow rate-controlling step (MFC 15) are provided in the middle of a liquid-sending step (the liquid-sending flow path 13). Therefore, it is possible to suppress an error caused by the air bubbles of the dissolved gas in the raw material compound (the flow rate variation). Therefore, it is possible to suppress the fluctuation of the bulk density of the glass soot, improve the yield of glass preforms, and decrease poor dehydration.

In the case of obtaining glass in which other elements (dopants) are doped into SiO₂, examples of a doping method include a method in which a compound including a dopant (doped substance) is supplied to the burner 20 and the raw material compound 11a is combusted, a method in which glass soot is exposed to the doped substance in the step of dehydrating the glass soot or the step of sintering the glass soot, and the like. As an exemplary method for supplying the doped substance to the burner 20, a method in which the doped substance is added to the raw material compound 11a and a method in which the raw material compound 11a is gasified and then the doped substance is added thereto.

Examples of doping elements include germanium (Ge), phosphorus (P), boron (B), fluorine (F), alkali metals, and the like. Examples of the doped substance in the case of doping fluorine include fluorine compounds such as silicon tetrafluoride (SiF₄), carbon tetrafluoride (CF₄), and sulfur hexafluoride (SF₆). Examples of the doped substance in the case of doping germanium include Ge compounds such as GeCl₄. Examples of other doped substances include oxides, halides, inorganic salts such as salts of nitric acid and salts of sulfuric acid, and organic compounds.

The glass preform may be an ingot. The glass preform may be processed so as to have a predetermined shape, structure, and the like. In addition, the glass preform may also have a distribution in composition or properties. In the case of obtaining an optical fiber preform as the glass preform, it is possible to provide a distribution to the refractive index by providing a core along or around the central axis and providing a clad at the outer circumferential portion of the core in a cylindrical optical fiber preform. The distribution of the refractive index can be formed by changing the refractive index of glass constituting the preform using dopants.

The manufacturing of an optical fiber using the optical fiber preform can be carried out using an ordinary spinning step. When the longitudinal direction of the optical fiber preform is substantially vertically disposed, the lower portion of the optical fiber preform is pulled down in a state of being melted by heating, it is possible to extract a fine glass fiber. The extracted glass fiber is slowly cooled in the air during the extraction and then coiled around a bobbin or the like.

In order to protect the glass fiber during the spinning of the optical fiber, it is possible to provide one or more coating layers of a resin or the like on the outer circumference of the glass fiber before the coiling of the glass fiber around the bobbin or the like. The resin is not particularly limited, and examples thereof include ultraviolet (UV)-curable resins and thermosetting resins such as a variety of acrylates.

Hitherto, the present invention has been described on the basis of the preferred embodiment; however, the invention is not limited to the above-described embodiment, and a variety of modifications are allowed within the scope of the gist of the present invention.

The raw material compound is not limited to the organic silicon compound, and it is possible to use a variety of compounds which can be sent as a liquid and gasified by heating and are capable of generating glass by combustion, for example, organic metal compounds, inorganic metal compounds, and the like.

### EXAMPLES

Hereinafter, the present invention will be specifically described using examples. SiO₂ generated using oxyhydrogen flame from the burner 20 was deposited using the manufacturing apparatus 10 shown in FIG. 1.

As the raw material compound 11a, octamethylcyclotetrasiloxane (OMCTS) was used. As the pressurization gas 12a, N₂ was used. In the deaeration device 14, the gas transmission portion 13a formed of a polytetrafluoroethylene resin was provided. The inner space 14c in contact with the outside of the gas transmission portion 13a was vacuumed to 17 kPa or less. In the gasifier 16, the raw material compound was heated under the supply of Ar and O₂ and thus gasified. In the burner 20, a mixture gas including OMCTS was combusted while supplying O₂ from the third introduction portion 19 and supplying Ar, O₂, H₂, and N₂ from the fourth introduction portion 21.

The vacuum exposure time and the specific surface area in the deaeration device 14 were changed like conditions 1 to 6 in Table 1, and the flow rate variations (%) of the raw material compound 11a under the respective conditions were measured. The flow rate variation is the percentage of the variation in relation to the set value of MFC 15.

**(Table 1)**

| Condition | Vacuum exposure time [s] | Specific surface area [mm⁻¹] | Flow rate variation [%] |
|---|---|---|---|
| 1 | 30 | 0.75 | 0.2 |
| 2 | 20 | 0.75 | 0.2 |
| 3 | 18 | 0.75 | 0.2 |
| 4 | 9 | 0.75 | 26.1 |
| 5 | 5 | 0.75 | 34.1 |
| 6 | 20 | 0.50 | 18.7 |

A graph showing a relationship between the vacuum exposure times and the flow rate variations shown in Table 1 is shown in FIG. 2.

As shown for the conditions 1 to 3, in a case in which the specific surface area of the raw material compound was 0.75 mm⁻¹ or more, and the vacuum exposure time of the raw material compound was 18 seconds or longer during the deaeration, the flow rate variation was reduced.

As shown for the conditions 4 to 6, in a case in which the vacuum exposure time of the raw material compound was short or the specific surface area was small, the flow rate variation increased. In addition, as a result of the flow rate variation, backfire was caused, or intermittent incomplete combustion occurred, and thus the manufacturing of glass soot became unstable.

### DESCRIPTION OF REFERENCE NUMERALS

10: Manufacturing Apparatus
11: Liquid Container
11a: Raw Material Compound
12: Gas Supply Portion
12a: Pressurization Gas
13: Liquid-Sending Flow Path
14: Deaeration Device
15: MFC
16: Gasifier
20: Burner
22: Flame

## Claims

1. A method of manufacturing SiO₂ used for a glass preform, the method comprising:
transporting a liquid of a raw material compound (11a) comprising an organic silicon compound in a liquid state to a gasifier (16) through a liquid-sending flow path (13) by pressurizing the liquid of the raw material compound (11a) using a pressurization gas (12a) from a liquid container (11) storing the liquid of the raw material compound (11a);
deaerating a dissolved gas (14b) from the pressurized liquid of the raw material compound (11a) in a deaeration device (14) positioned in the middle of the liquid-sending flow path (13);
controlling a flow rate of the deaerated liquid of the raw material compound (11a) using a mass flow controller (15) positioned in the middle of the liquid-sending flow path (13) and between the deaeration device (14) and the gasifier (16);
gasifying the liquid of the raw material compound (11a) in the gasifier (16) transported through the mass flow controller (15); and
combusting the gasified raw material compound using a burner (20) to generate SiO₂,
wherein, during the deaerating of the dissolved gas (14b), a specific surface area of the raw material compound (11a), which is a vacuum exposure area per unit volume of a raw material liquid, is 0.75 mm⁻¹ or more, and a vacuum exposure time of the raw material compound (11a) is 18 seconds or longer.

2. The method according to Claim 1,
wherein the glass preform is an optical fiber preform.

## Patentansprüche

1. Verfahren zum Herstellen von SiO₂, das für einen Glasvorformling verwendet wird, wobei das Verfahren umfasst:
Transportieren einer Flüssigkeit einer Rohmaterialverbindung (11a), die eine organische Siliziumverbindung in einem flüssigen Zustand umfasst, durch einen flüssigkeitsbefördernden Flussweg (13) indem die Rohmaterialverbindung (11a) unter Verwendung eines Druckbeaufschlagungsgases (12a) unter Druck gesetzt wird von einem Flüssigkeitsbehälter (11), der die Flüssigkeit der Rohmaterialverbindung (11a) lagert, zu einem Vergaser (16);
Entlüften eines gelösten Gases (14b) aus der unter Druck stehenden Flüssigkeit der Rohmaterialverbindung (11a) in einer Entlüftungsvorrichtung (14), die in der Mitte des flüssigkeitsbefördernden Flusswegs (13) angeordnet ist;
Steuern einer Flussrate der entlüfteten Flüssigkeit der Rohmaterialverbindung (11a) unter Verwendung eines Massenflussreglers (15), der in der Mitte des flüssigkeitsbefördernden Flusswegs (13) und zwischen der Entlüftungsvorrichtung (14) und dem Vergaser (16) angeordnet ist;
Vergasen der durch den Massenflussregler (15) transportierten Flüssigkeit der Rohmaterialverbindung (11a) in dem Vergaser (16); und
Verbrennen der vergasten Rohmaterialverbindung unter Verwendung eines Brenners (20), um SiO₂ zu erzeugen,
wobei während des Entlüftens des gelösten Gases (14b) eine spezifische Oberfläche der Rohmaterialverbindung (11a), die eine Vakuumexpositionsfläche pro Volumeneinheit einer Rohmaterialflüssigkeit ist, 0,75 mm⁻¹ oder mehr beträgt und eine Vakuumexpositionszeit der Rohmaterialverbindung (11a) 18 Sekunden oder länger beträgt.

2. Verfahren nach Anspruch 1, wobei der Glasvorformling ein Lichtleitervorformling ist.

## Revendications

1. Procédé de fabrication de SiO₂ utilisé pour une préforme en verre, le procédé comprenant :
le transport d'un liquide d'un composé de matière première (11a) comprenant un composé de silicium organique à l'état liquide vers un gazéifieur (16) à travers un trajet d'écoulement d'envoi de liquide (13) en pressurisant le liquide du composé de matière première (11a) en utilisant un gaz de pressurisation (12a) à partir d'un récipient de liquide (11) stockant le liquide du composé de matière première (11a) ;
la désaération d'un gaz dissous (14b) à partir du liquide pressurisé du composé de matière première (11a) dans un dispositif de désaération (14) positionné au milieu du trajet d'écoulement d'envoi de liquide (13) ;
la régulation d'un débit du liquide désaéré du composé de matière première (11a) en utilisant un régulateur de débit massique (15) positionné au milieu du trajet d'écoulement d'envoi de liquide (13) et entre le dispositif de désaération (14) et le gazéifieur (16) ;
la gazéification du liquide du composé de matière première (11a) dans le gazéifieur (16) transporté à travers le régulateur de débit massique (15) ; et
la combustion du composé de matière première gazéifié en utilisant un brûleur (20) pour générer du SiO₂,
dans lequel, pendant la désaération du gaz dissous (14b), une surface spécifique du composé de matière première (11a), qui est une surface d'exposition au vide par unité de volume du liquide de matière première, est de 0,75 mm⁻¹ ou plus, et un temps d'exposition au vide du composé de matière première (11a) est de 18 secondes ou plus.

2. Procédé selon la revendication 1,
dans lequel la préforme en verre est une préforme de fibre optique.
